# EUROPÄISCHE PATENTSCHRIFT

(11) **EP 3 715 146 B1**
(45) Veröffentlichungstag und Bekanntmachung des Hinweises auf die Patenterteilung: **26.01.2022**
(21) Anmeldenummer: 20155052.2
(22) Anmeldetag: 03.02.2020
(51) Int. Cl.: B60C 11/03, B60C 11/11, B60C 11/12

(54) **FAHRZEUGLUFTREIFEN**
PNEUMATIC TYRE
PNEUMATIQUE DE VÉHICULE

(30) Priorität: 28.03.2019 DE 102019204328
(43) Veröffentlichungstag der Anmeldung: 30.09.2020
(73) Patentinhaber: Continental Reifen Deutschland GmbH, 30165 Hannover (DE)
(72) Erfinder: Schlittenhard, Jan, 30419 Hannover (DE); Bauer, Claudia, 30419 Hannover (DE); Vennebörger, Martin, 30419 Hannover (DE)
(74) Vertreter: Continental Corporation

(56) Entgegenhaltungen:
- EP-A1- 1 580 034
- EP-B1- 1 580 034
- WO-A1-2007/028438
- WO-A1-2018/225501
- DE-A1-102014 214 841
- US-A1- 2018 333 992

## Beschreibung

Die Erfindung betrifft einen Fahrzeugluftreifen mit einem Laufstreifen mit Profilblöcken, welche mit sich unter einem Winkel von 0° bis zu 45° zur axialen Richtung erstreckenden Einschnitten mit einer Tiefe von bis zu 100% der Profiltiefe und einer Breite von 0,4 mm bis 1,0 mm sowie mit einer Vielzahl von parallel zu den Einschnitten verlaufenden Mikrorillen versehen sind, deren Breite geringer ist als die Breite der Einschnitte und deren Tiefe höchstens 0,5 mm beträgt, wobei zumindest ein Einschnitt in den Profilblöcken ein geschlossener Einschnitt ist, an dessen Enden jeweils ein den geschlossenen Einschnitt senkrecht zu seiner Erstreckungsrichtung beidseitig überragender einschnittfreier Profilblock-Bereich anschließt, wobei in zumindest einem einschnittfreien Profilblock-Bereich zumindest eine gegebenenfalls über diesen hinausragende Mikrorille verläuft.

Es ist bekannt, bei für den Wintereinsatz vorgesehenen Fahrzeugluftreifen, insbesondere Fahrzeugluftreifen für Personenkraftwagen, die Profilelemente, beispielsweise Profilblöcke, im Laufstreifen nicht nur mit einer Vielzahl von Einschnitten zu versehen sondern auch gleichmäßig mit einer Vielzahl von parallel zu den Einschnitten und parallel zueinander verlaufenden sehr seichten und sehr schmalen Mikrorillen zu überziehen. Im Gegensatz zu den üblichen Einschnitten schließen sich Mikrorillen in Folge ihrer geringen Tiefe nicht unter den beim Abrollen des Reifens auftretenden Kräften. Die durch die Mikrorillen gebildete Oberflächenstruktur trägt bei neuem Reifen, insbesondere bei sogenannten "Soft-Compound-Winterreifen", dazu bei, den sich beim Bremsen und beim Beschleunigen auf Schnee und/oder eisbedeckten Fahrbahnen bildenden Wasserfilm von der Oberfläche der Profilelemente schnell abzuleiten und derart den Laufstreifen zu entwässern.

Ein Fahrzeugluftreifen der eingangs genannten Art ist beispielsweise aus der WO 2018/225501 A1 bekannt. Gemäß einem Ausführungsbeispiel weist der Fahrzeugluftreifen einen Laufstreifen mit in Profilblockreihen ausgebildeten Profilblöcken auf, welche durch Umfangs- und Querrillen voneinander getrennt sind. In jedem Profilblock sind zwei Reihen aus in Umfangsrichtung aufeinanderfolgenden, sich in axialer Richtung erstreckenden, in Draufsicht zick-zack-förmig verlaufenden, geschlossenen Einschnitten ausgebildet. Die geschlossenen Einschnitte weisen eine Breite kleiner 1,0 mm und eine Tiefe von 2,0 mm bis 100% der Profiltiefe auf. Ferner sind die Profilblöcke mit einer Vielzahl von parallel zueinander verlaufenden Mikrorillen versehen, welche in bandförmigen Profilbockbereichen ausgebildet sind, welche zum Teil über die geschlossenen Einschnitte verlaufen und zum Teil komplett neben den geschlossenen Einschnitten ausgebildet sind. An den Enden der geschlossenen Einschnitte und zwischen den geschlossenen Einschnitten befinden sich daher einschnittfreie Profilblock-Bereiche mit Mikrorillen.

Ferner ist aus der DE 10 2017 211 128 A1 ein Fahrzeugluftreifen mit einem Laufstreifen bekannt, welcher Profilblöcke aufweist, die mit einer Vielzahl von Einschnitten mit einer Breite von 0,4 mm bis 0,8 mm und einer Tiefe an der tiefsten Stelle von mindestens 50 % der Profiltiefe sowie mit einer Vielzahl von parallel zu den Einschnitten verlaufenden Mikrorillen mit einer Breite und einer Tiefe von jeweils 0,2 mm bis 0,5 mm versehen sind. In jedem Profilblock verlaufen zwischen zumindest zwei Einschnitten zumindest zwei Mikrorillen, zwischen den sonstigen Einschnitten verläuft jeweils zumindest eine Mikrorille. Bei blockrandseitig verlaufenden Einschnitten ist zwischen diesen und dem Blockrandbereich lediglich eine einzige Mikrorille vorgesehen. Diese Ausgestaltung trägt dem Umstand Rechnung, dass beim Fahren auf schnee- und/oder eisbedeckten Fahrbahnen die sich beim Abrollvorgang auf Schnee bzw. Eis bildende Schmelzwassermenge bei den Blockrandbereichen geringer ist als in der Blockmitte.

Jüngere Entwicklungen am Kraftfahrzeugsektor, insbesondere bei Personenkraftwagen, resultieren in immer schwereren und leistungsstärkeren Kraftfahrzeugen mit hohen Drehmomenten, auch und insbesondere auf dem Gebiet der Elektromobilität. Die modernen Kraftfahrzeuge werden zudem mit elektronischen Fahrerassistenzsystemen, wie ABS, ASR und ESP, ausgestattet. Insbesondere bei Kraftfahrzeugen, die im Winter in nordischen Ländern gefahren werden, führt diese Entwicklung in Kombination mit Winterreifen mit besonders weichen Laufstreifenmischungen und Laufstreifenprofilen mit Einschnitten und Mikrorillen zu unerwünschten Nebeneffekten. So werden beispielsweise am Laufstreifen auftretende Verformungen von der Fahrzeugsensorik als Reifenschlupf interpretiert und die Assistenzsysteme, die programmgemäß arbeiten, drosseln beispielsweise die Motorleistung oder reduzieren den Bremsdruck, was unerwünscht zu erhöhten Beschleunigungszeiten und verlängerten Bremswegen führt. Dadurch kann die Sicherheit für den Fahrer verschlechtert sein. Es kann auch vorkommen, dass sich die Rekuperation bei Elektrofahrzeugen abschaltet und dadurch die Reichweite der Fahrzeuge reduziert wird.

Die Reifenentwicklung steht daher vor der Aufgabe, ein hohes Niveau der Winterfahr- und Wintereignungseigenschaften von Winterreifen, die insbesondere in nordischen Ländern auf Kraftfahrzeugen eingesetzt werden, sicherzustellen, vor allem die Bremseigenschaften auf Eis, insbesondere auf "nassem" Eis, zu verbessern und dabei gleichzeitig die Steifigkeit des Laufstreifens derart zu beeinflussen, dass die oben genannten unerwünschten Effekte nicht auftreten können. Der Erfindung liegt somit die Aufgabe zugrunde, einen Fahrzeugluftreifen eingangs genannter Art diesbezüglich entsprechend auszugestalten bzw. zu verbessern.

Gelöst wird die gestellte Aufgabe erfindungsgemäß dadurch, dass jeder der einschnittfreien Profilblock-Bereiche, welcher an ein Ende des geschlossenen Einschnittes anschließt, eine in der Erstreckungsrichtung des Einschnittes ermittelte Breite von 1,0 mm bis 5,0 mm aufweist, wobei die zumindest eine Mikrorille eine Länge aufweist, welche 80% bis 120% der Breite des einschnittfreien Profilblock-Bereiches beträgt.

Die in erfindungsgemäßen Profilblöcken vorgesehenen geschlossenen Einschnitte - Einschnitte die innerhalb des jeweiligen Profilblockes enden - haben zur Folge, dass der jeweilige Profilblock vorteilhafterweise etwas steifer wird. Dadurch wird die Verformung des Profilblockes beim Abrollen des Reifens reduziert. Es bleibt daher eine optimal große Kontaktfläche des Profilblockes zum Untergrund erhalten, wodurch die Brems- und Traktionseigenschaften des Reifens, vor allem aber die Bremseigenschaften auf Eis, verbessert sind. Gemäß der Erfindung befindet sich nun in zumindest einem der einschnittfreien Profilblock-Bereiche, die an den Enden der geschlossenen Einschnitte anschließen, zumindest eine Mikrorille, die in der Lage ist, den beim Abrollen des Reifens sich zwischen der Reifenoberfläche und dem Eis bildenden dünnen Wasserfilm aufzunehmen und wirkungsvoll abzuleiten. Diese Maßnahme vermeidet das Entstehen eines sich ansonsten auf die Brems- und Traktionseigenschaften ungünstig auswirkenden Wasserfilms.

Besonders bevorzugt und vorteilhaft ist eine Ausführung, bei welcher in jedem einschnittfreien Profilblock-Bereich zumindest eine Mikrorille verläuft.

Gemäß einer bevorzugten Ausführung weist ferner der Laufstreifen Profilblöcke mit mehreren, insbesondere zwei oder drei, aufeinanderfolgenden geschlossenen Einschnitten auf, wobei zwischen den einander zugewandten Enden der geschlossenen Einschnitte und/oder zwischen ihren Enden und Profilblockkanten jener bzw. jene einschnittfreie(n) Profilblock-Bereich(e) ist bzw. sind, in welchem bzw. welchen jeweils zumindest eine Mikrorille verläuft. In Abstimmung mit der Größe der jeweiligen Profilblöcke lässt sich durch mehrere geschlossene Einschnitte, die eine "Reihe" von geschlossenen Einschnitten bilden, auf besonders vorteilhafte Weise Einfluss auf die Steifigkeit des jeweiligen Profilblockes nehmen und damit eine möglichst große Kontaktfläche des Profilblockes zum Untergrund, auch beim Bremsen und beim Beschleunigen, sicherstellen.

Bei einer weiteren bevorzugten Ausführung verläuft in zumindest einem der einschnittfreien Profilblock-Bereiche ein Paar von Mikrorillen. In einem Profilblock mit mehreren aufeinanderfolgenden einschnittfreien Profilblock-Bereichen wird die Ausgestaltung insbesondere derart gewählt, dass in sämtlichen einschnittfreien Profilblock-Bereichen jeweils ein Paar von Mikrorillen verläuft. Mikrorillenpaare in den einschnittfreien Profilblock-Bereichen haben sich als besonders wirkungsvoll zur Aufnahme und Ableitung von Wasser aus dem Wasserfilm erwiesen, welcher sich zwischen der Oberfläche des Profilblockes und eisigem Untergrund bildet.

Bevorzugt ist ferner eine Ausführung, bei der die Mikrorillen eines Paares von Mikrorillen zu der in der Erstreckungsrichtung des jeweiligen geschlossenen Einschnittes verlaufenden und in den einschnittfreien Profilblock-Bereich fortgesetzten Mittellinie des geschlossenen Einschnittes einen Normalabstand von 0,6 mm bis 3,0 mm aufweisen. Auch diese Maßnahme unterstützt ein optimales Ableiten des erwähnten Wasserfilms.

Bei einer weiteren bevorzugten Ausführungsvariante münden die Mikrorillen, die im bzw. über den einschnittfreien Profilblock-Bereich verlaufen, in ein Ende oder in einen Endabschnitt eines geschlossenen Einschnittes. Bei einer alternativen Ausführung ist vorgesehen, dass die Mikrorillen in einem Abstand vom Ende oder vom Endabschnitt eines geschlossenen Einschnittes enden. Auch diese Maßnahmen erlauben eine Anpassung und Abstimmung der versteifenden Wirkung der geschlossenen Einschnitte und des "Wasserableitvermögens" der Mikrorillen auf die jeweilige Profilblock-Geometrie.

Vorteilhaft und bevorzugt ist ferner eine Ausführung, bei der in einschnittfreien Profilblock-Bereichen bei Profilblockkanten die Mikrorille(n) bis zur jeweiligen Profilblockkante verläuft bzw. verlaufen. Diese Maßnahme ist für eine gute Ableitung des erwähnten Wasserfilms in Rillen, die den Profilblock begrenzen, von Vorteil.

Bei üblichen Ausgestaltungen von Profilblöcken sind Einschnitte vorgesehen, welche die Profilblöcke durchqueren und derart in Blocksegmente gliedern. Bei derartigen Ausführungen wird der zumindest eine geschlossene Einschnitt und die in den einschnittfreien Profilblock-Bereichen verlaufenden Mikrorillen bevorzugt in demselben Blocksegment ausgebildet. Sind mehrere durchquerende Einschnitte vorgesehen, welche die Profilblöcke in zumindest drei Blocksegmente gliedern, werden bevorzugt der zumindest eine geschlossene Einschnitt und die Mikrorillen in zumindest einem der randseitigen Blocksegmente der Profilblöcke ausgebildet. Diese Maßnahme ist vor allem deswegen von Vorteil, weil insbesondere die randseitigen Profilblocksegmente zu Verformungen neigen.

Ist der Laufstreifen laufrichtungsgebunden gestaltet, so ist es besonders vorteilhaft, wenn das Blocksegment, welches zumindest einen geschlossenen Einschnitt und die Mikrorillen aufweist, jenes ist, mit welchem der jeweilige Profilblock beim Abrollen des Reifens bei Vorwärtsfahrt zuerst in den Untergrund eintritt. Eine Laufrichtungsgebundenheit eines Laufstreifens wird beispielsweise durch V-förmig im Laufstreifen verlaufende Schräg-und/oder Querrillen realisiert.

Weitere Merkmale, Vorteile und Einzelheiten der Erfindung werden nun anhand der Zeichnung, die schematisch Ausführungsbeispiele der Erfindung zeigt, näher beschrieben. Dabei zeigen
Fig. 1 eine vergrößerte Draufsicht auf einen Profilblock im mittleren Bereich eines Laufstreifens eines Fahrzeugluftreifens mit einer ersten Ausführungsvariante der Erfindung,
Fig. 2 eine vergrößerte Draufsicht auf einen Profilblock im mittleren Bereich eines Laufstreifens eines Fahrzeugluftreifens mit einer zweiten Ausführungsvariante der Erfindung und
Fig. 3 eine vergrößerte Draufsicht auf einen schulterseitigen Profilblock eines Laufstreifens eines Fahrzeugluftreifens mit einer dritten Ausführungsvariante der Erfindung.

Gemäß der Erfindung ausgeführte Fahrzeugluftreifen sind Reifen in Radialbauart, insbesondere für Personenkraftwagen, Vans oder Light-Trucks, wobei die Reifen zum Fahren unter winterlichen Fahrbedingungen besonders gut geeignet sind.

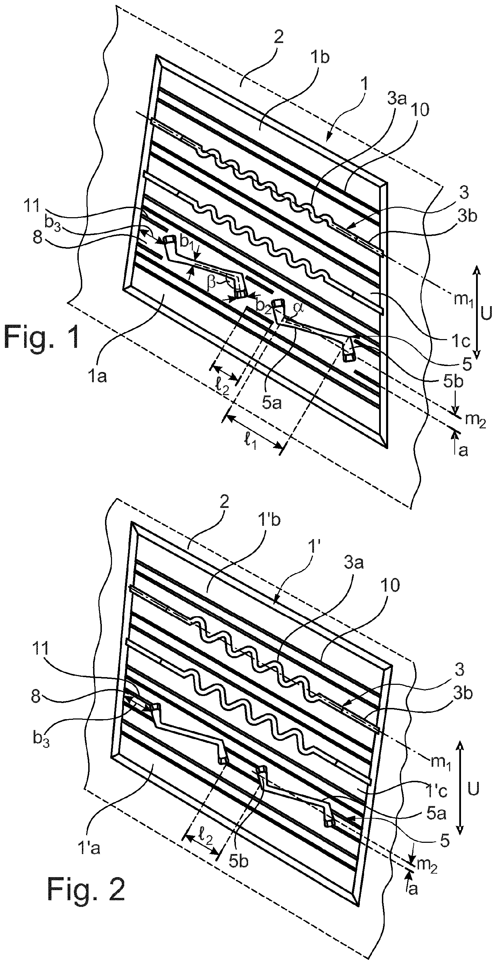

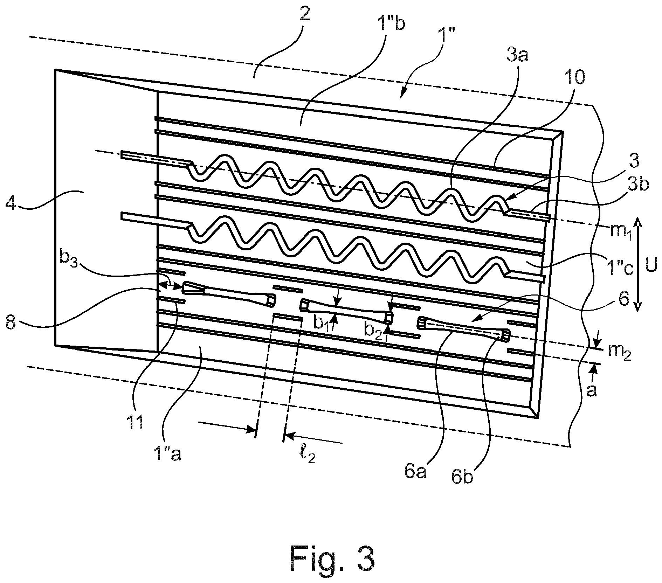

Fig. 1 bis Fig. 3 zeigen jeweils eine Draufsicht auf einen Profilblock 1 (Fig. 1), 1' (Fig. 2), 1" (Fig. 3) im Laufstreifen eines Fahrzeugluftreifens, wobei dieser Profilblock 1, 1', 1" in den beiden Umfangsrichtungen (Doppelpfeil U) durch in Fig. 1 bis Fig. 3 lediglich andeutete Rillen 2 von weiteren nicht gezeigten und jeweils analog gestalteten Profilblöcken getrennt ist. Die Rillen 2 verlaufen in Draufsicht gerade, parallel zueinander sowie in insbesondere bekannter Weise zur axialen Richtung unter einem Winkel von 0° bis 45° und weisen eine Tiefe auf, die entweder der für den jeweiligen Fahrzeugluftreifen vorgesehenen Profiltiefe, welche üblicherweise 6,5 mm bis 13,0 mm beträgt, entspricht oder zumindest abschnittsweise etwas geringer ist als diese.

Fig. 1 und Fig. 2 zeigen jeweils einen im mittleren Bereich des Laufstreifens befindlichen Profilblock 1 (Fig. 1), 1' (Fig. 2) mit einer in Draufsicht in axialer Richtung langgestreckt parallelogrammförmigen Gestalt. Fig. 3 zeigt einen in Draufsicht ebenfalls langgestreckt parallelogrammförmigen schulterseitigen Profilblock 1'. Die Profilblöcke 1, 1', 1" sind insbesondere Blöcke von in Umfangsrichtung des Laufstreifens umlaufenden Blockreihen.

Die Profilblöcke 1, 1', 1" sind jeweils von zwei Einschnitten 3 durchquert, welche sich in Draufsicht - bezogen auf ihre in Erstreckungsrichtung ausgerichteten Mittellinien m₁ - parallel zu den Rillen 2 erstrecken und sich bei den gezeigten Ausführungsbeispielen jeweils aus einem in Draufsicht wellenförmig verlaufenden zentralen Abschnitt 3a und zwei in Draufsicht gerade verlaufenden Randabschnitten 3b zusammensetzen. Im schulterseitigen Profilblock 1" laufen die durchquerenden Einschnitte 3 laufstreifenaußenseitig an einer Schulterflanke 4 des Reifens aus (Fig. 3). Die durchquerenden Einschnitte 3 weisen eine Breite von 0,4 mm bis 1,0 mm, insbesondere bis zu 0,8 mm, und in radialer Richtung eine Tiefe von 20% bis 100%, insbesondere 30% bis 75%, der Profiltiefe auf, wobei die Einschnitte 3 Abschnitte unterschiedlicher Tiefen aufweisen können.

Die durchquerenden Einschnitte 3 teilen den jeweiligen Profilblock 1, 1', 1" in zwei randseitige Blocksegmente 1a, 1b (Profilblock 1), 1'a, 1'b (Profilblocke 1') und 1"a, 1"b (Profilblock 1") und ein zwischen den Einschnitten 3 befindliches mittleres Blocksegment 1c, 1'c, 1"c.

In jedem Profilblock 1, 1', 1" ist das eine randseitige Blocksegment 1a, 1'a, 1"a mit zwei (Fig. 1, Fig. 2) oder drei (Fig. 3) innerhalb des Blocksegmentes 1a, 1'a, 1"a endenden, daher nachfolgend als geschlossen bezeichneten Einschnitten 5, 6 versehen, die sich parallel zu den Einschnitten 3 erstrecken und aufeinander folgen, sodass ihre in Erstreckungsrichtung ausgerichteten Mittellinien m₂ miteinander fluchten und parallel zu den Mittelinien m₁ der Einschnitte 3 verlaufen. Die geschlossenen Einschnitte 5, 6, befinden zumindest im Wesentlichen in der Mitte des jeweiligen Blocksegmentes 1a, 1'a, 1"a.

Bei der in Fig. 1 und Fig. 2 gezeigten Ausführung setzen sich die beiden geschlossenen Einschnitte 5 in Draufsicht jeweils aus einem gerade verlaufenden mittleren Abschnitt 5a und zwei seitlichen Endabschnitten 5b zusammen, wobei der mittlere Abschnitt 5a länger, insbesondere zumindest doppelt so lang ist wie die seitlichen Endabschnitte 5b. Der mittlere Abschnitt 5a erstreckt sich unter einem Winkel α von 10° bis 20° zur Mittellinie m₂, die Endabschnitte 5b weisen in entgegengesetzte Umfangsrichtungen und verlaufen zum mittleren Abschnitt 5a unter einem Winkel β von 90° bis 130°, insbesondere von 105° bis 125°. Die auf die Mittellinie m₂ projizierte Länge l₁ des mittleren Abschnittes 5a beträgt 50% bis 75%, insbesondere 60% bis 70%, der entlang der Mittellinie m₁ ermittelten Länge der Einschnitte 3. Der mittlere Abschnitt 5a weist ferner eine Breite b₁ auf, die 0,4 mm bis 1,0 mm, insbesondere bis 0,8 mm beträgt und kann ausgehend von seiner Mitte in Richtung zu den seitlichen Endabschnitten 5b kontinuierlich breiter werden kann. Die Endabschnitte 4b weisen - unter Vernachlässigung etwaiger endseitiger Abrundungen - eine zu ihren freien Enden kontinuierlich zunehmende Breite und an ihren freien Enden eine Breite b₂ von 130% bis 350%, insbesondere von mindestens 200%, der Breite b₁ auf.

Bei der in Fig. 3 gezeigten Ausführung, ist das randseitige Blocksegment 1"a mit drei geschlossenen Einschnitten 6 versehen. Jeder geschlossene Einschnitt 6 verläuft - bezogen auf seine in Erstreckungsrichtung ausgerichtete Mittellinie m₂ - gerade und weist einen weitgehend konstant breiten mittleren Abschnitt 6a mit eine Breite b₁ von 0,4 mm bis 1,0 mm, insbesondere bis 0,8 mm, und zwei Endabschnitte 6b auf, deren Breite zu ihren Enden größer wird und welche an ihren Enden, unter Vernachlässigung etwaiger endseitiger Abrundungen, eine Breite b₂ von 130% bis 350%, insbesondere von mindestens 200%, der Breite b₁ aufweisen.

Jedes Blocksegment 1a, 1'a, 1"a weist zwischen den unmittelbar aufeinander folgenden geschlossenen Einschnitten 5, 6 sowie zwischen diesen und den benachbarten Randkanten des Profilblockes 1, 1', 1" einschnittfreie Blockbereiche 8 auf, deren Breite b₃ - als Abstand zwischen den Enden aufeinander folgender Einschnitte 5, 6 und als Abstand zwischen den Einschnitten und den benachbarten Blockkanten sowie entlang der verlängerten bzw. über die Einschnitte 5, 6 fortgesetzten Mittellinien m₂ ermittelt - 1,0 mm bis 5,0 mm, insbesondere 2,0 mm bis 5,0mm, beträgt.

Die Profilblöcke 1, 1', 1" sind ferner jeweils mit einer Anzahl von gerade und parallel zu den Mittellinien m₁, m₂ der Einschnitte 3, 5 und 6 verlaufenden Mikrorillen 10 und 11 versehen, welche eine Breite und eine Tiefe von jeweils 0,3 mm bis 0,5 mm, insbesondere von bis zu 0,4 mm, aufweisen. Die Mikrorillen 10 durchqueren die Profilblöcke 1, 1', 1" als Mikrorillenpaare, vorzugsweise jeweils ein Paar zu beiden Seiten der aufeinanderfolgenden geschlossenen Einschnitte 5, 6 und vorzugsweise jeweils ein Paar im zweiten randseitigen Blocksegment 1b, 1'b, 1"b und im mittleren Blocksegment 1c, 1'c, 1"c.

Die Mikrorillen 11 verlaufen bei den gezeigten Ausführungen ebenfalls paarweise, jedoch in den bzw. über die Blockbereiche 8 und weisen eine Länge l₂ auf, welche 80% bis 120%, insbesondere bis zu 100%, der jeweiligen Breite b₃ der Blockbereiche 8 beträgt. Von den zu einem Paar gehörenden Mikrorillen 11 verläuft die ein Mikrorille 11 an der einen Seite der Mittellinie m₂, die andere an der anderen Seite der Mittellinie m₂ unter gleich großen Abständen a von 0,6 mm bis 3,0 mm.

Bei den in Fig. 1 und Fig. 3 gezeigten Ausführungsvarianten weisen die Mikrorillen 11 keine Verbindung zu den Einschnitten 5 bzw. 6 auf, bei der Variante gemäß Fig. 2 münden die Mikrorillen 11 in die Einschnitte 6 ein. Jene Mikrorillen 11, die über die bzw. in den bei den Blockkanten befindlichen Blockbereichen 8 verlaufen, erstrecken sich bevorzugt bis zu den Blockkanten.

Die Erfindung ist auf die beschriebenen Ausführungsvarianten nicht beschränkt. Insbesondere kann in den einschnittfreien Blockbereichen jeweils eine einzige Mikrorille oder eine Gruppe von bis zu vier Mikrorillen verlaufen. Es sind auch Ausführungen möglich, bei welchen lediglich in einem der einschnittfreien Blockbereiche eine Mikrorille verläuft.

### Bezugsziffernliste

- 1, 1', 1": Profilblock
- 1a, 1b: randseitiges Blocksegment
- 1'a, 1'b: randseitiges Blocksegment
- 1"a, 1"b: randseitiges Blocksegment
- 1c, 1'c, 1"c: mittleres Blocksegment
- 2: Rille
- 3: Einschnitt
- 3a: zentraler Abschnitt
- 3b: Randabschnitt
- 4: Schulterflanke
- 5, 6: geschlossener Einschnitt
- 6b: Endabschnitt
- 5a: mittlerer Abschnitt
- 5b: Endabschnitt
- 8: einschnittfreier Blockbereich
- α: Winkel (mittlerer Abschnitt 5a)
- β: Winkel (Endabschnitt 5b)
- a: Abstand
- b₁: Breite (mittlerer Abschnitt 5a, 6a)
- b₂: Breite (Endabschnitt 5b, 6b)
- b₃: Breite (Blockbereich 8)
- l₁: Länge (mittlerer Abschnitt 5a)
- l₂: Länge (Mikrorille 11)
- m₁, m₂: Mittellinie

## Patentansprüche

1. Fahrzeugluftreifen mit einem Laufstreifen mit Profilblöcken (1, 1', 1"), welche mit sich unter einem Winkel von 0° bis zu 45° zur axialen Richtung erstreckenden Einschnitten (3, 5, 6) mit einer Tiefe von bis zu 100% der Profiltiefe und einer Breite von 0,4 mm bis 1,0 mm sowie mit einer Vielzahl von parallel zu den Einschnitten (3, 5, 6) verlaufenden Mikrorillen (10, 11) versehen sind, deren Breite geringer ist als die Breite der Einschnitte (3, 5, 6) und deren Tiefe höchstens 0,5 mm beträgt,
wobei zumindest ein Einschnitt in den Profilblöcken (1, 1', 1") ein geschlossener Einschnitt (5, 6) ist, an dessen Enden jeweils ein den geschlossenen Einschnitt (5, 6) senkrecht zu seiner Erstreckungsrichtung beidseitig überragender einschnittfreier Profilblock-Bereich (8) anschließt, wobei in zumindest einem einschnittfreien Profilblock-Bereich (8) zumindest eine gegebenenfalls über diesen hinausragende Mikrorille (11) verläuft, **dadurch gekennzeichnet,**
**dass** jeder der einschnittfreien Profilblock-Bereiche (8), welcher an ein Ende des geschlossenen Einschnittes (5, 6) anschließt, eine in der Erstreckungsrichtung des Einschnittes (5, 6) ermittelte Breite (b₃) von 1,0 mm bis 5,0 mm aufweist, wobei die zumindest eine Mikrorille (11) eine Länge (l₂) aufweist, welche 80% bis 120% der Breite (b₃) des einschnittfreien Profilblock-Bereiches (8) beträgt.

2. Fahrzeugluftreifen nach Anspruch 1, **dadurch gekennzeichnet, dass** in jedem einschnittfreien Profilblock-Bereich (8) zumindest eine Mikrorille (11) verläuft.

3. Fahrzeugluftreifen nach Anspruch 1 oder 2, **dadurch gekennzeichnet, dass** der Laufstreifen Profilblöcke (1, 1', 1") mit mehreren, insbesondere zwei oder drei, aufeinanderfolgenden geschlossenen Einschnitten (5, 6) aufweist, wobei zwischen den einander zugewandten Enden der geschlossenen Einschnitte (5, 6) und/oder zwischen ihren Enden und Profilblockkanten jener bzw. jene einschnittfreie(n) Profilblock-Bereich(e) (8) ist bzw. sind, in welchem bzw. in welchen jeweils zumindest eine Mikrorille (11) verläuft.

4. Fahrzeugluftreifen nach einem der Ansprüche 1 bis 3, **dadurch gekennzeichnet, dass** in zumindest einem der einschnittfreien Profilblock-Bereiche (8) ein Paar von Mikrorillen (11) verläuft.

5. Fahrzeugluftreifen nach Anspruch 4, **dadurch gekennzeichnet, dass** die eine Mikrorille (11) des Paares von Mikrorillen an der einen Seite der in der Erstreckungsrichtung des geschlossenen Einschnittes (5, 6) verlaufenden und in den einschnittfreien Profilblock-Bereich (8) fortgesetzten Mittellinie (m₁) des geschlossenen Einschnittes (5, 6) verläuft, die zweite Mikrorille (11) an der anderen Seite.

6. Fahrzeugluftreifen nach Anspruch 4 oder 5, **dadurch gekennzeichnet, dass** die Mikrorillen (11) eines Paares von Mikrorillen zu der in der Erstreckungsrichtung des geschlossenen Einschnittes (5, 6) verlaufenden und in den einschnittfreien Profilblock-Bereich (8) fortgesetzten Mittellinie (m₁) des geschlossenen Einschnittes (5, 6) einen Abstand (a) von 0,6 mm bis 3,0 mm aufweisen.

7. Fahrzeugluftreifen nach einem der Ansprüche 1 bis 6, **dadurch gekennzeichnet, dass** die Mikrorille(n) (11) in ein Ende oder in einen Endabschnitt (5b, 6b) eines geschlossenen Einschnittes (5, 6) einmündet bzw. einmünden.

8. Fahrzeugluftreifen nach einem der Ansprüche 1 bis 6, **dadurch gekennzeichnet, dass** die Mikrorille(n) (11) in einem Abstand von einem Ende oder von einem Endabschnitt (5b, 6b) eines geschlossenen Einschnittes (5, 6) endet bzw. enden.

9. Fahrzeugluftreifen nach einem der Ansprüche 1 bis 6, **dadurch gekennzeichnet, dass** in einschnittfreien Profilblock-Bereichen (8) bei Profilblockkanten die Mikrorille(n) (11) bis zur jeweiligen Profilblockkante verläuft bzw. verlaufen.

10. Fahrzeugluftreifen nach einem der Ansprüche 1 bis 9, wobei in Profilblöcken Einschnitte vorgesehen sind, welche die Profilblöcke durchqueren und in Blocksegmente gliedern, **dadurch gekennzeichnet, dass** der zumindest eine geschlossene Einschnitt (5, 6) und die in den einschnittfreien Profilblock-Bereichen (8) verlaufenden Mikrorillen (11) in demselben Blocksegment (1a, 1'a, 1"a) ausgebildet sind.

11. Fahrzeugluftreifen nach einem der Ansprüche 1 bis 10, wobei in Profilblöcken Einschnitte vorgesehen sind, welche die Profilblöcke durchqueren und in zumindest drei Blocksegmente gliedern, **dadurch gekennzeichnet, dass** der zumindest eine geschlossene Einschnitt (5, 6) und die Mikrorillen (11) in zumindest einem der randseitigen Blocksegmente (1a, 1'a, 1"a) der Profilblöcke (1, 1', 1") ausgebildet sind.

12. Fahrzeugluftreifen nach Anspruch 10 oder 11, mit einem laufrichtungsgebunden gestalteten Laufstreifen, **dadurch gekennzeichnet, dass** das Blocksegment (1a, 1'a, 1"a), in welchem zumindest ein geschlosser Einschnitt (5, 6) und die Mikrorillen (11) ausgebildet sind, jenes ist, mit welchem der jeweilige Profilblock beim Abrollen des Reifens bei Vorwärtsfahrt zuerst in den Untergrund eintritt.

## Claims

1. Pneumatic vehicle tyre having a tread with profile blocks (1, 1', 1") equipped with sipes (3, 5, 6), which sipes (3, 5, 6) extend at an angle of 0° up to 45° with respect to the axial direction and have a depth of up to 100% of the profile depth and a width of 0.4 mm to 1.0 mm and have a multiplicity of microchannels (10, 11), which microchannels (10, 11) run parallel to the sipes (3, 5, 6) and have a width smaller than the width of the sipes (3, 5, 6) and have a depth of at most 0.5 mm,
wherein at least one sipe in the profile blocks (1, 1', 1") is a closed sipe (5, 6), the ends of which are adjoined by a respective sipe-free profile block region (8) which projects beyond the closed sipe (5, 6) to both sides perpendicularly to the direction of extent of said closed sipe (5, 6), wherein, in at least one sipe-free profile block region (8), there extends at least one microchannel (11), which optionally projects beyond said sipe-free profile block region (8),
**characterized**
**in that** each of the sipe-free profile block regions (8) which adjoins an end of the closed sipe (5, 6) has a width (b₃) of 1.0 mm to 5.0 mm measured in the direction of extent of the sipe (5, 6), wherein the at least one microchannel (11) has a length (l₂) which amounts to 80% to 120% of the width (b₃) of the sipe-free profile block region (8).

2. Pneumatic vehicle tyre according to Claim 1, **characterized in that** at least one microchannel (11) runs in each sipe-free profile block region (8).

3. Pneumatic vehicle tyre according to Claim 1 or 2, **characterized in that** the tread has profile blocks (1, 1', 1") with multiple, in particular two or three, successive closed sipes (5, 6), wherein that or those sipe-free profile block regions (8) in which in each case one microchannel (11) runs is or are between the mutually facing ends of the closed sipes (5, 6) and/or between the ends thereof and profile block edges.

4. Pneumatic vehicle tyre according to any one of Claims 1 to 3, **characterized in that** a pair of microchannels (11) runs in at least one of the sipe-free profile block regions (8).

5. Pneumatic vehicle tyre according to Claim 4, **characterized in that** one microchannel (11) of the pair of microchannels runs at one side of the centreline (m₁), running in the direction of extent of the closed sipe (5, 6) and continues in the sipe-free profile block region (8) of the closed sipe (5, 6), and the second microchannel (11) runs at the other side.

6. Pneumatic vehicle tyre according to Claim 4 or 5, **characterized in that** the microchannels (11) of a pair of microchannels have a spacing (a) of 0.6 mm to 3.0 mm to the centreline (m₁), running in the direction of extent of the closed sipe (5, 6) and continued in the sipe-free profile block region (8), of the closed sipe (5, 6).

7. Pneumatic vehicle tyre according to any one of Claims 1 to 6, **characterized in that** the microchannel(s) (11) open(s) into one end or into one end section (5b, 6b) of the closed sipe (5, 6).

8. Pneumatic vehicle tyre according to any one of Claims 1 to 6, **characterized in that** the microchannel(s) (11) end(s) with a spacing to an end or to an end section (5b, 6b) of a closed sipe (5, 6) .

9. Pneumatic vehicle tyre according to any one of Claims 1 to 6, **characterized in that**, in sipe-free profile block regions (8) at profile block edges, the microchannel(s) (11) run(s) to the respective profile block edge.

10. Pneumatic vehicle tyre according to any one of Claims 1 to 9, wherein sipes are provided in profile blocks, which sipes extend through the profile blocks and divide said profile blocks into block segments, **characterized in that** the at least one closed sipe (5, 6) and the microchannels (11) running in the sipe-free profile block regions (8) are formed in the same block segment (1a, 1'a, 1"a).

11. Pneumatic vehicle tyre according to any one of Claims 1 to 10, wherein sipes are provided in profile blocks, which sipes extend through the profile blocks and divide said profile blocks into at least three block segments, **characterized in that** the at least one closed sipe (5, 6) and the microchannels (11) are formed in at least one of the edge-side block segments (1a, 1'a, 1"a) of the profile blocks (1, 1', 1").

12. Pneumatic vehicle tyre according to Claim 10 or 11, having a tread of directional design, **characterized in that** the block segment (1a, 1'a, 1"a) in which at least one closed sipe (5, 6) and the microchannels (11) are formed is that with which the respective profile block first enters the ground contact patch during the rolling movement of the tyre during forward travel.

## Revendications

1. Pneumatique de véhicule comprenant une bande de roulement comprenant des blocs de profil (1, 1', 1"), qui sont pourvus d'entailles (3, 5, 6) s'étendant à un angle de 0° à 45° par rapport à la direction axiale, d'une profondeur de jusqu'à 100 % de la profondeur de profil et d'une largeur de 0,4 mm à 1,0 mm, ainsi que d'une pluralité de micro-rainures (10, 11) parallèles aux entailles (3, 5, 6), dont la largeur est inférieure à la largeur des entailles (3, 5, 6) et dont la profondeur est d'au plus 0,5 mm,
au moins une entaille dans les blocs de profil (1, 1', 1") étant une entaille fermée (5, 6), aux extrémités de laquelle se raccorde respectivement une zone de bloc de profil exempte d'entaille (8), s'élevant des deux côtés plus haut que l'entaille fermée (5, 6) perpendiculairement à sa direction d'extension, au moins une micro-rainure (11) s'étendant, en dépassant éventuellement de celle-ci, dans au moins une zone de bloc de profil exempte d'entaille (8),
caractérisé en que
chacune des zones de bloc de profil exemptes d'entaille (8), qui se raccorde à une extrémité de l'entaille fermée (5, 6), présente une largeur (b₃) déterminée dans la direction d'extension de l'entaille (5, 6) de 1,0 mm à 5,0 mm, l'au moins une micro-rainure (11) présentant une longueur (l₂) qui est de 80 % à 120 % de la largeur (b₃) de la zone de bloc de profil exempte d'entaille (8) .

2. Pneumatique de véhicule selon la revendication 1, **caractérisé en ce qu'**au moins une micro-rainure (11) s'étend dans chaque zone de bloc de profil exempte d'entaille (8).

3. Pneumatique de véhicule selon la revendication 1 ou 2, **caractérisé en ce que** la bande de roulement présente des blocs de profil (1, 1', 1") comprenant plusieurs, en particulier deux ou trois, entailles fermées successives (5, 6), la ou les zones de bloc de profil exemptes d'entailles (8) dans laquelle ou lesquelles au moins une micro-rainure (11) s'étend respectivement se trouvant entre les extrémités tournées l'une vers l'autre des entailles fermées (5, 6) et/ou entre leurs extrémités et des bords de bloc de profil.

4. Pneumatique de véhicule selon l'une quelconque des revendications 1 à 3, **caractérisé en ce qu'**une paire de micro-rainures (11) s'étend dans au moins une des zones de bloc de profil exemptes d'entaille (8).

5. Pneumatique de véhicule selon la revendication 4, **caractérisé en ce qu'**une micro-rainure (11) de la paire de micro-rainures s'étend d'un côté de la ligne médiane (m₁) de l'entaille fermée (5, 6), qui s'étend dans la direction d'extension de l'entaille fermée (5, 6) et se prolonge dans la zone de bloc de profil exempte d'entaille (8), la deuxième micro-rainure (11) s'étend de l'autre côté.

6. Pneumatique de véhicule selon la revendication 4 ou 5, **caractérisé en ce que** les micro-rainures (11) d'une paire de micro-rainures présentent un écart (a) de 0,6 mm à 3,0 mm par rapport à la ligne médiane (m₁) de l'entaille fermée (5, 6), qui s'étend dans la direction d'extension de l'entaille fermée (5, 6) et se prolonge dans la zone de bloc de profil exempte d'entaille (8).

7. Pneumatique de véhicule selon l'une quelconque des revendications 1 à 6, **caractérisé en ce que** la ou les micro-rainures (11) débouchent dans une extrémité ou dans une section d'extrémité (5b, 6b) d'une entaille fermée (5, 6).

8. Pneumatique de véhicule selon l'une quelconque des revendications 1 à 6, **caractérisé en ce que** la ou les micro-rainures (11) se terminent à un écart d'une extrémité ou d'une section d'extrémité (5b, 6b) d'une entaille fermée (5, 6).

9. Pneumatique de véhicule selon l'une quelconque des revendications 1 à 6, **caractérisé en ce que**, dans des zones de bloc de profil exemptes d'entaille (8), pour des bords de bloc de profil, la ou les micro-rainures (11) s'étendent jusqu'au bord de bloc de profil respectif.

10. Pneumatique de véhicule selon l'une quelconque des revendications 1 à 9, des entailles étant prévues dans des blocs de profil, qui traversent les blocs de profil et les divisent en segments de blocs, **caractérisé en ce que** l'au moins une entaille fermée (5, 6) et les micro-rainures (11) s'étendant dans les zones de bloc de profil exemptes d'entaille (8) sont formées dans le même segment de bloc (1a, 1'a, 1"a).

11. Pneumatique de véhicule selon l'une quelconque des revendications 1 à 10, des entailles étant prévues dans des blocs de profil, qui traversent les blocs de profil et les divisent en au moins trois segments de blocs, **caractérisé en ce que** l'au moins une entaille fermée (5, 6) et les micro-rainures (11) sont formées dans au moins un des segments de bloc côté bord (1a, 1'a, 1"a) des blocs de profil (1, 1', 1").

12. Pneumatique de véhicule selon la revendication 10 ou 11, comprenant une bande de roulement conçue pour être directionnelle, **caractérisé en ce que** le segment de bloc (1a, 1'a, 1"a), dans lequel sont formées au moins une entaille fermée (5, 6) et les micro-rainures (11), est celui par lequel le bloc de profil respectif entre en premier dans le sol lors du roulement du pneu en marche avant.
